# EUROPEAN PATENT APPLICATION

(11) **EP 4 574 494 A1**
(43) Date of publication of application: **25.06.2025**
(21) Application number: 24219033.8
(22) Date of filing: 11.12.2024
(51) Int. Cl.: B60K 1/04

(54) **CAR WITH BATTERY INTEGRATED IN THE UNDER-DOOR SIDE MEMBERS**

(30) Priority: 13.12.2023 IT 202300026565
(71) Applicant: FERRARI S.p.A., 41100 Modena (IT)
(72) Inventor: FAVARETTO, Fabrizio, 41100 Modena (IT)
(74) Representative: Studio Torta S.p.A.

(57) **Abstract**

A car has a passenger compartment (4), two access doors (9) to the passenger compartment (4), a support frame (2) provided with two under-door side members (10) each mounted under a relative access door (9), and a battery pack (15) provided with a plurality of battery modules (17) accommodated inside a box-shaped containing body (16) mounted between, and fixed to, said under-door side members (10).

## Description

### CROSS-REFERENCE TO RELATED APPLICATIONS

This patent application claims priority from Italian patent application no. 102023000026565 filed on December 13, 2023, the entire disclosure of which is incorporated herein by reference.

### TECHNICAL FIELD

The present invention relates to a car.

In particular, the present invention relates to a car of the type comprising a support frame defining at least part of the lower floor of the car; a passenger compartment mounted on the support frame and projecting upwards from the lower floor; and a powermotor for movement of said car.

### CONTEXT

The passenger compartment is provided with two access doors associated with respective under-door side members, which are commonly known with the term "sills", and define part of the support frame of the car.

Each under-door side member extends beneath a relative access door, and is defined by a tubular section bar with an elongated shape connected with the tubular section bar of the other under-door side member by means of a plurality of connecting crossbeams.

The car further comprises a battery pack mounted on the lower floor and configured to supply power to the powermotor in the case of a powermotor of the electric type and/or to provide power to further electric utilities of the car itself.

The known cars of the type described above have certain drawbacks mainly deriving from the fact that the assembly defined by the connecting crossbeams of the under-door side members and by the battery pack has a relatively high weight that is not very compatible with the performance required of a car, in particular a high-performance sports car.

### SUMMARY

The object of the present invention is to provide a car that is free from the drawbacks described here above and that is simple and economical to manufacture.

According to the present invention, a car is provided as claimed in the appended claims.

### BRIEF DESCRIPTION OF THE FIGURES

The present invention will now be described with reference to the appended drawings, which illustrate a non-limiting embodiment thereof, wherein:
Figure 1 is a perspective and schematic view, with parts removed for clarity, of a preferred embodiment of the car according to the present invention;
Figures 2 and 3 are two perspective and schematic views, with parts in cross-section and parts removed for clarity, of a detail of the car of Figure 1; and
Figure 4 is a perspective and schematic view, on an enlarged scale and with parts removed for clarity, of a detail of Figures 2 and 3.

### DESCRIPTION OF EMBODIMENTS

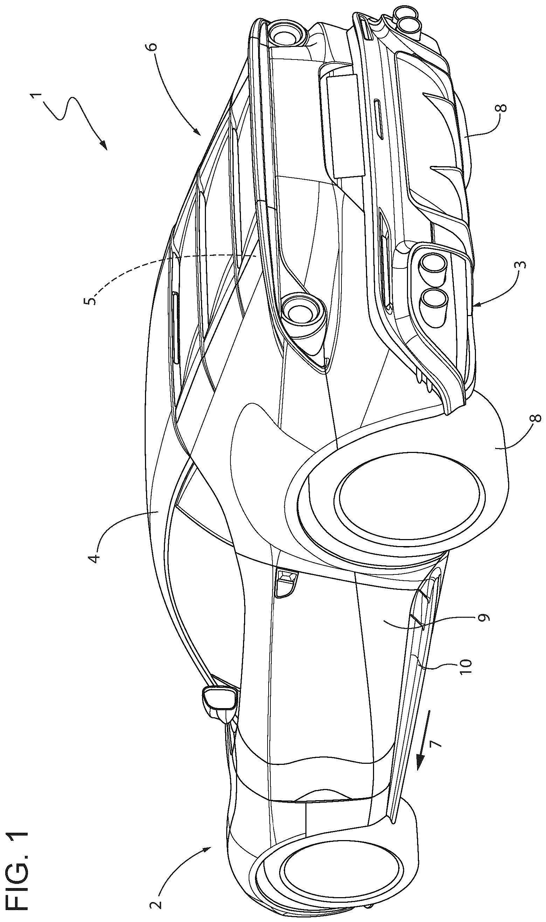

With reference to figure 1, the number 1 denotes, in its entirety, a car, in particular a high-performance sports car, comprising a support frame 2 defining at least part of a lower floor 3 of the car 1, and a passenger compartment 4 mounted on the frame 2 and projecting upwards from the floor 3 itself.

The car 1 further comprises a powermotor 5 of the known type, which is mounted at the centre of a rear zone 6 of the frame 2, in particular parallel to a direction 7 of advancement of the car 1, and is connected in a known way with two rear drive wheels 8 of the car 1 itself.

The passenger compartment 4 is provided with two access doors 9, each of which extends above an under-door side member 10 with elongated shape defining part of the frame 2.

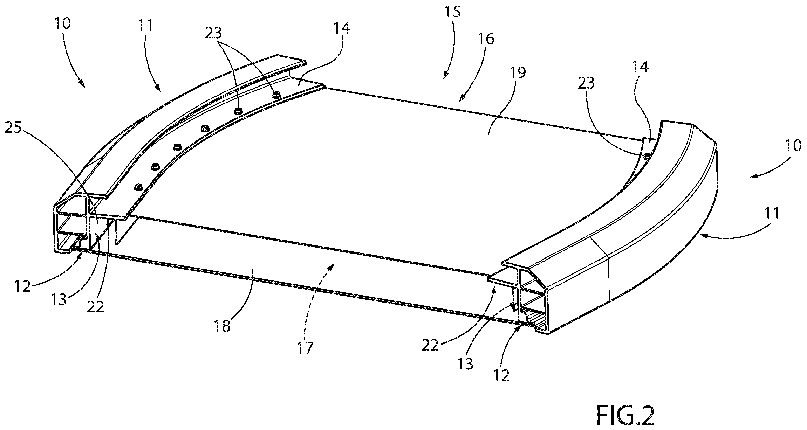

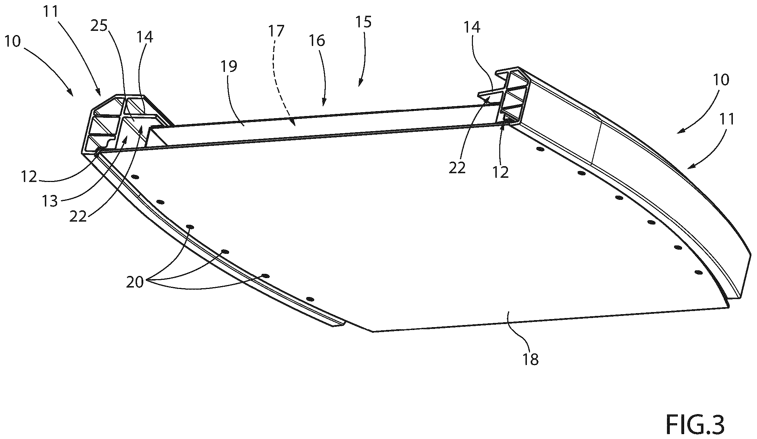

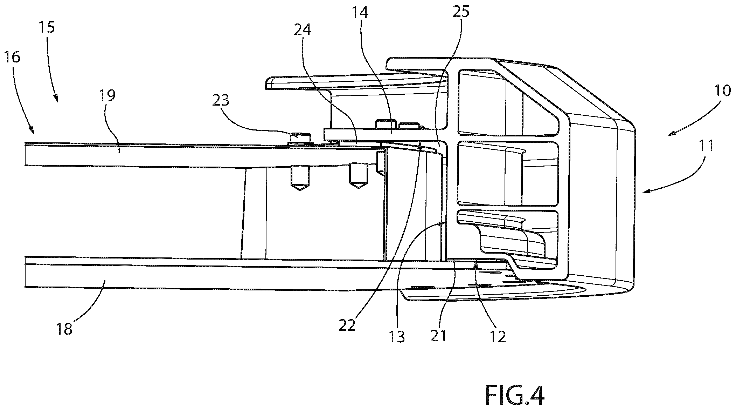

According to what is shown in Figures 2, 3, and 4, each side member 10 comprises a metal section bar 11, which has a curvilinear shape with concavity facing the section bar 11 of the other side member 10, and is defined, in this case, by an IPE beam.

The section bar 11 is limited by a lower face 12, is also limited by a side face 13 facing the section bar 11 of the other side member 10, and is provided with a fixing flange 14 projecting from an intermediate point of the face 13 towards the section bar 11 of the other side member 10.

The car 1 further comprises a battery pack 15, which is arranged between the side members 10, and comprises, in turn, a box-shaped containing body 16 and a plurality of battery modules 17 accommodated inside the body 16 itself.

The body 16 has a substantially flat lower plate 18, and an upper lid 19 with a substantially parallelepiped shape.

The plate 18 is fixed to the face 12 of each section bar 11 by means of a relative plurality of fastening screws/bolts 20 and with the interposition of a relative gasket 21.

The lid 19 is fixed to a lower face 22 of each flange 14 by means of a relative plurality of fastening screws/bolts 23 and with the interposition of a relative gasket 24.

Each section bar 11 defines, together with the plate 18, with the lid 19, and with the relative gaskets 21, 24, a housing chamber 25 for cables and/or electric and/or electronic components (not shown) and/or for operating fluid supplying ducts (not shown).

The integration between the under-door side members 10 and the box-shaped containing body 16 of the battery pack 15 gives the support frame 2 a relatively simple and lightweight structure compatible with the performance required of a car, in particular a high-performance sports car.

## Claims

1. A car comprising a passenger compartment (4); two access doors (9) allowing access to the passenger compartment (4); a support frame (2), which defines at least part of a lower floor (3) of the car and comprises, in turn, two under-door side members (10), each mounted under a relative access door (9) and comprising a section bar (11) with an elongated shape; and a battery pack (15) comprising a box-shaped containing body (16) and a plurality of battery modules (17) accommodated inside the box-shaped containing body (16); and **characterized in that** the box-shaped containing body (16) of the battery pack (15) is mounted between and is fixed to the two under-door side members (10).

2. The car according to claim 1, wherein each under-door side member (10) is provided with a fixing flange (14) projecting from the relative section bar (11) towards the other under-door side member (10); the box-shaped containing body (16) being fixed to the section bar (11) and to the fixing flange (14) of each under-door side member (10).

3. The car according to claim 2 and further comprising first fixing means (20) to connect the box-shaped containing body (16) and the section bar (11) of each under-door side member (10) to one another and second fixing means (23) to connect the box-shaped containing body (16) and the fixing flange (14) of each under-door side member (10) to one another (10).

4. The car according to claim 2 or 3, wherein the section bar (11) of each under-door side member (10) is delimited by a lower face (12) and by a side face (13) facing the other under-door side member (10) and provided with the relative fixing flange (14); the box-shaped containing body (16) being fixed to the lower face (12) of each section bar (11) and to a lower face (22) of each fixing flange (14).

5. The car according to any one of the claims from 2 to 4, wherein the box-shaped containing body (16) is fixed to the section bar (11) of each under-door side member (10) with the interposition of a relative first gasket (21).

6. The car according to any one of the claims from 2 to 5, wherein the box-shaped containing body (16) is fixed to the fixing flange (14) of each under-door side member (10) with the interposition of a relative second gasket (24).

7. The car according to claims 5 and 6, wherein the box-shaped containing body (16) comprises a lower plate (18) fixed to the section bars (11) of the two under-door side members (10) through the interposition of said first gaskets (21) and an upper lid (19), which is fixed to the lower plate (18) and is further fixed to the fixing flanges (14) of the two under-door side members (10) through the interposition of said second gaskets (24).

8. The car according to claim 7, wherein each section bar (11) defines, together with the lower plate (18), the upper lid (19) and the relative first and second gaskets (21, 24), a relative housing chamber (25) for cables and/or electric and/or electronic components and/or operating fluid supplying ducts.

9. The car according to any one of the preceding claims, wherein each under-door side member (10) has a curved shape with a concavity facing the other under-door side member (10).

10. The car according to any one of the preceding claims, wherein the section bar (11) of each under-door side member (10) has the shape of an IPE beam.
